# EUROPÄISCHE PATENTSCHRIFT

(11) **EP 0 404 793 B1**
(45) Veröffentlichungstag und Bekanntmachung des Hinweises auf die Patenterteilung: **29.12.1993**
(21) Anmeldenummer: 89903129.8
(22) Anmeldetag: 15.03.1989
(51) Int. Cl.: B23Q 11/10, B23B 51/04

(54) **VERFAHREN ZUR INNENZUFUHR VON KÜHL-, SCHMIER- ODER SCHNEIDMITTEL ZU DEN SCHNEIDKANTEN ODER FÜHRUNGSLEISTEN EINES SICH DREHENDEN BEARBEITUNGSWERKZEUGES**
PROCESS FOR INTERNAL SUPPLY OF COOLANT, LUBRICANT OR CUTTING AGENT TO THE CUTTING EDGES OR GUIDE BARS OF A ROTARY TOOL
PROCEDE POUR L'ALIMENTATION INTERNE EN AGENTS DE REFROIDISSEMENT, DE LUBRIFICATION OU DE COUPE DES BORDS TRANCHANTS OU DE BARRES CONDUCTRICES D'UN OUTIL ROTATIF D'USINAGE

(30) Priorität: 16.03.1988 DE 3808707
(43) Veröffentlichungstag der Anmeldung: 02.01.1991
(73) Patentinhaber: FORD FRANCE S. A., 92506 Rueil-Malmaison (FR); FORD MOTOR COMPANY LIMITED, Brentwood Essex (GB); FORD-WERKE AKTIENGESELLSCHAFT, 50725 Köln (DE)
(72) Erfinder: KRATZ, Theo, D-5014 Kerpen (DE); BARDEN, Karl-Willi, D-5060 Berg.-Gladbach 2 (DE); VOGELFÄNGER, Hans, D-5040 Brühl (DE)
(74) Vertreter: Messulam, Alec Moses
(86) Internationale Anmeldenummer: EP8900275
(87) Internationale Veröffentlichungsnummer: WO8908534

(56) Entgegenhaltungen:
- WO-A-84/01737
- CH-A- 141 459
- DE-A- 3 003 858
- DE-A- 3 030 792
- GB-A- 832 112
- US-A- 3 156 274

## Beschreibung

Die Erfindung betrifft ein Verfahren zur Innenzufuhr von Flüssigkeit zu den Schneidkanten eines an einem Ende einer sich drehenden und axial bewegbaren Werkzeugspindel aufgenommenen Bearbeitungswerkzeuges, der im Oberbegriff des Patentanspruches 1 erläuterten Art.

Aus der DE-C-486 635 ist eine Vorrichtung zum Zuführen von Kühlwasser durch die Poren einer Schleifscheibe bekannt, wobei eine ringförmige Schleifscheibe zwischen zwei Gegenplatten festgespannt wird, von denen die eine an der Werkzeugspindel befestigt wird, während die andere eine kesselförmige Wasserkammer bildet, die sich zur ringförmigen Schleifscheibe hin erweitert und eine Eintrittsöffnung aufweist, die zu der von der Werkzeugspindel abliegenden Seite hin ringförmig offen ist. An einer Stelle dieser ringförmigen Eintrittsöffnung ist ein Ende einer Kühlwasserzuleitung etwas einragend angeordnet.

Aus der DE-A1-30 03 858 ist eine Vorrichtung zum Aufspannen eines Sägeblattes bekannt, wobei ein aus zwei Scheiben gebildetes Sägeblatt von zwei Gegenscheiben eingespannt wird, wovon die eine Gegenscheibe wieder mit einer Erweiterung versehen ist die einen Flüssigkeitsraum bildet, der über eine ringförmige Eintrittsöffnung von der der Werkzeugspindel abliegenden Seite her mit einem Flüssigkeitsstrahl beaufschlagbar ist.

Bei beiden bekannten Vorrichtungen handelt es sich um Werkzeuge mit hoher Umlaufdrehzahl und keiner axialen Beweglichkeit ihrer Werkzeugspindel und die an den Gegenplattenvorgesehenen Eintrittsöffnungen für den Flüssigkeitsstrahl, die als Ringöffnung ausgebildet sind, sind in ihrem Querschnitt normalerweise wesentlich größer als der von einer Leitung gelieferte Flüssigkeitsstrahl.

Dementsprechend kann auch bei Zufuhr von großen Flüssigkeitsmengen unter hohem Druck im Flüssigkeitsraum kein Druckaufbau bewirkt werden, der die Flüssigkeit in bestimmte Kanäle drängen würde. Dies ist im Falle der gezeigten Schleifscheibe bzw. des Sägeblattes auch nicht erforderlich, da solche Werkzeuge mit hoher Drehzahl laufen und die im Flüssigkeitsraum vorhandene Flüssigkeit durch die hohe Fliehkraft radial nach außen gedrängt wird, so daß sie selbst durch die Poren der porösen Schleifscheibe bzw. durch den doppelten Scheibenkörper des Sägeblattes an den Schneidkanten austreten kann.

Die Aufgabe der Erfindung ist es, ein Verfahren zur Innenzufuhr von Flüssigkeit zu den Schneidkanten eines an einem Ende einer sich drehenden und axial bewegbaren Werkzeugspindel aufgenommenen Bearbeitungswerkzeuges zu schaffen, bei dem einerseits die in Verbindung mit einer Flüssigkeitszufuhr über hohle Werkzeugspindeln auftretenden Dichtigkeitsprobleme vermieden werden und andererseits die Flüssigkeit auch bei langsam laufenden Bearbeitungswerkzeugen mit dem nötigen Druck an die entsprechenden Schneidkanten geführt werden kann.

Gemäß der Erfindung wird diese Aufgabe gelöst, indem bei einem Verfahren gemäß dem Oberbegriff des Patentanspruches 1 die im Kennzeichenteil des Patentanspruches 1 aufgezeigten Maßnahmen ausgeführt werden.

In den Ansprüchen 2 - 4 sind weitere zweckmäßige Ausführungsformen des Verfahrens nach Anspruch 1 erläutert.

Dadurch, daß zum Aufbau eines Druckes im Flüssigkeitsraum, dieser durch eine Abschlußblende mit einer die Eintrittsöffnung bildenden Öffnung abgeschlossen wird und der Flüssigkeitsstrahl des axial von der Eintrittsöffnung beabstandeten Strahlrohres die Eintrittsöffnung beaufschlagt, kann durch die Bemessung des Volumens und des Druckes mit dem die Flüssigkeit in den Flüssigkeitsraum im Werkzeugkörper eingeführt wird, dafür gesorgt werden, daß im Flüssigkeitsraum ein Druckaufbau stattfindet, der dafür sorgt, daß die Flüssigkeit über radiale und schräge Kanäle sicher zu den Austrittsöffnungen in unmittelbarer Nähe der Schneidkanten geführt wird. Auch wenn bestimmte Schneidkanten in Bezug auf die Versorgung mit der Flüssigkeit eine ungünstige, das heißt, nicht durch die Fliehkraft unterstützte konkrete Lage aufweisen
Dadurch, daß die Abschlußblende mit einer trichterförmigen Eintrittsöffnung zum Flüssigkeitsstrahl hin versehen ist, kann auch während einer axialen Bewegung der Werkzeugspindel und bei feststehendem Strahlrohr sichergestellt werden, daß ein bestimmtes Volumen und mit bestimmtem Druck in den Flüssigkeitsraum des Werkzeugkörpers gelangen.

Dadurch, daß das Strahlrohr oder die Flüssigkeitsvorrichtung fest, teleskopisch beweglich oder eine der Bewegung der Werkzeugspindel entsprechend gesteuerte, nachfolgende Bewegung ausführt, wird sicher gestellt, daß die mit bestimmen Volumen und Druck gelieferte Flüssigkeit nicht anderweitig verloren geht, sondern für den erwünschten Druckaufbau im Flüssigkeitsraum im Werkzeugkörper sorgen kann.

Dadurch, daß der Flüssigkeitsstrahl durch entsprechende Ventilanordnungen erst eingeschaltet wird, wenn sich der Werkzeugkörper in seiner Bearbeitungsposition befindet, kann das eingesetzte Volumen von Flüssigkeit, Schneid-, Kühl- oder Schmierflüssigkeit auf einem gewünschten minimalen Flüssigkeitsumlauf gehalten werden.

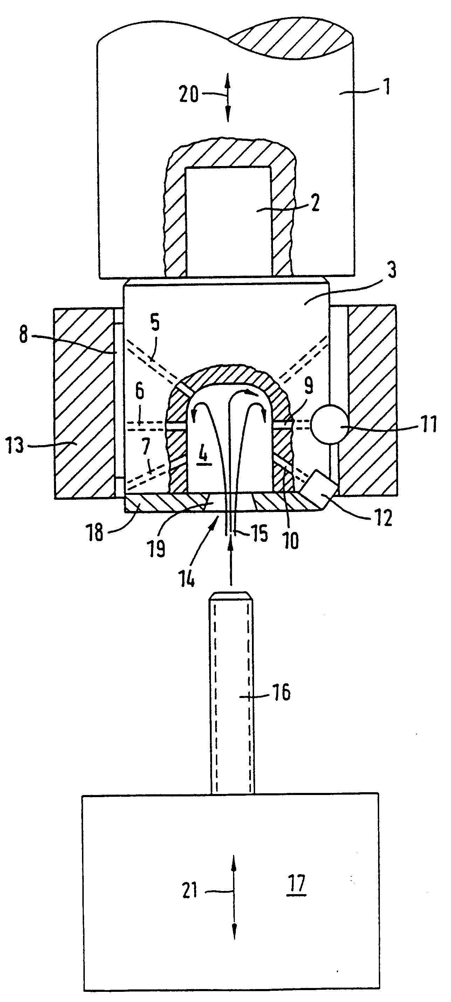

Die Erfindung wird anhand eines in der beiliegenden Zeichnung gezeigten Anwendungsbeispieles näher erläutert. Es zeigt:
Die Figur, eine schematische Darstellung der Aggregate zur Durchführung des erfindungsgemäßen Verfahrens zur Innenzufuhr von Flüssigkeit zu den Schneidkanten eines an einem Ende einer sich drehenden und axial bewegbaren Werkzeugspindel aufgenommenen Bearbeitungswerkzeuges.

Eine Werkzeugspindel 1 einer nicht näher dargestellten Werkzeugmaschine ist mit einer angedeuteten Werkzeugaufnahme 2 versehen, in der ein Werkzeugkörper 3 in bekannter Weise aufgenommen wird.

Der Werkzeugkörper 3 ist mit einem inneren Flüssigkeitsraum 4 versehen, von dem radiale und schräge Kanäle 5, 6 und 7 z.B. zu Werkzeugführungsleisten 8 und radiale Kanäle 9 und 10 zu Austrittsöffnungen in unmittelbarer Nähe der Schneidkanten von Schneidelementen von 11 und 12 zur Bearbeitung eines Werkstückes 13 führen.

Der Werkzeugkörper 3 ist mit einer axialen Eintrittsöffnung 14 für einen Flüssigkeitstrahl 15 versehen, der von der der Werkzeugspindel 1 gegenüberliegenden Seite auf den Werkzeugkörper 3 gerichtet ist.

Der Flüssigkeitsstrahl 15 wird durch ein Strahlrohr 16 erzeugt, das über eine Flüssigkeitsvorrichtung 17 in herkömmlicher Weise mit Flüssigkeit unter Druck versorgt wird.

Der innere Flüssigkeitsraum 4 im Werkzeugkörper 3 kann unmittelbar die Eintrittsöffnung bilden, die im wesentlichen vom Flüssigkeitsstrahl 15 beaufschlagt wird, so daß ein entsprechender Druckaufbau im Flüssigkeitsraum 4 ermöglicht wird.

Der innere Flüssigkeitsraum 4 im Werkzeugkörper 3 kann jedoch auch größer gehalten werden, um ggf. den Anschluß an die verschiedenen radialen und schrägen Kanäle 5, 6, 7 und 9 und 10 besser zu ermöglichen und wird dann durch eine untere Abschlußblende 18 mit einer trichterförmigen Eintrittsöffnung 19 abgeschlossen, die wieder im wesentlichen vom Flüssigkeitsstrahl 15 beaufschlagt wird.

Je nachdem, ob der vorgesehene Bearbeitungsweg der Werkzeugspindel 1, der durch den Doppelpfeil 20 angedeutet ist, kleiner oder größer ist, kann der von der Flüssigkeits-Vorrichtung 17 über das Strahlrohr 16 erzeugte Flüssigkeitsstrahl 15 von einer stationären Einrichtung bereitgestellt werden oder aber das Strahlrohr 16 ermöglicht eine teleskopische Verkürzung oder die Flüssigkeits-Vorrichtung 17 macht eine entsprechend gesteuerte, durch den Doppelpfeil 21 angedeutete Bewegung mit.

Das erfindungsgemäße Verfahren ist für eine Vielzahl von Bearbeitungvorgängen einsetzbar, die, wie aus der Zeichnung ersichtlich, auf die Bearbeitung von Durchgangsbohrungen ausgerichtet sind. Dementsprechend können Messerköpfe, Fräsköpfe, Bohrwerkzeuge und dergleichen mit einer inneren Flüssigkeitszufuhr versorgt werden, die von der der Werkzeugspindel gegenüberliegenden Seite beaufschlagt wird, wodurch die bisher bei solchen Anwendungsfällen in Kauf genommenen kostspieligen und verschleißanfälligen Abdichtungen in hohlen Werkzeugspindeln zur Zuführung des entsprechenden Flüssigkeitsstromes vermieden werden können.

## Patentansprüche

1. Verfahren zur Innenzufuhr von Flüssigkeit zu den Schneidkanten eines an einem Ende einer sich drehenden und axial bewegbaren (20) Werkzeugspindel (1) aufgenommenen Bearbeitungswerkzeuges (3), das einen Werkzeugkörper mit einem inneren Flüssigkeitsraum (4) aufweist, der über zum Teil radiale Kanäle (5, 6 und 7 bzw. 9 und 10) mit Austrittsöffnungen in unmittelbarer Nähe der Schneidkanten (8 bzw. 11 und 12) verbunden und mit einer zum Flüssigkeitsraum führenden axialen Eintrittsöffnung (14) versehen ist, wobei der Flüssigkeitsraum durch den Flüssigkeitsstrahl (15) eines von einer Flüssigkeits-Vorrichtung (17) gespeisten Strahlrohres (16) von der der Werkzeugspindel gegenüberliegenden Seite beaufschlagt wird,
**dadurch gekennzeichnet**, daß
- zum Aufbau eines Druckes im Flüssigkeitsraum (4) dieser durch eine Abschlußblende (18) mit einer die Eintrittsöffnung bildenden Öffnung (19) abgeschlossen wird und
- der Flüssigkeitsstrahl des axial von der Eintrittsöffnung beabstandeten Strahlrohres (16) die Eintrittsöffnung (14) beaufschlagt.

2. Verfahren nach Anspruch 1,
**dadurch gekennzeichnet**, daß
- die Abschlußblende (18) mit einer trichterförmigen Eintrittsöffnung (19) zum Flüssigkeitsstrahl (15) versehen ist.

3. Verfahren nach Anspruch 1,
**dadurch gekennzeichnet**, daß
- das Strahlrohr (16) oder die Flüssigkeitsvorrichtung (17) fest, teleskopisch beweglich oder eine der Bewegung der Werkzeugspindel (1) entsprechend gesteuerte, nachfolgende Bewegung (21) ausführt.

4. Verfahren nach Anspruch 3,
**dadurch gekennzeichnet**, daß
- der Flüssigkeitsstrahl (15) durch entsprechende Ventilanordnungen erst eingeschaltet wird, wenn sich der Werkzeugkörper (3) in seiner Bearbeitungsposition befindet.

## Claims

1. A method for the internal supply of liquid to the cutting edges of a machine tool (3) which is received at one end of a rotating and axially movable (20) tool spindle (1) and which has a tool member with an inner liquid chamber (4) which is connected by way of partially radial ducts (5, 6 and 7, and 9 and 10 respectively) to discharge openings in the immediate vicinity of the cutting edges (8, and 11 and 12 respectively) and is provided with an axial entry opening (14) leading to the liquid chamber, the liquid chamber being acted upon from the side opposite the tool spindle by the jet (15) of liquid from a steel pipe (16) supplied by a liquid device (17), characterized in that
- in order to build up a pressure in the liquid chamber (4), the said liquid chamber (4) is closed off by a closure screen (18) with an opening (19) forming the entry opening, and
- the jet of liquid from the steel pipe (16) at an axial distance from the entry opening acts upon the entry opening (14).

2. A method according to Claim 1, characterized in that the closure screen (18) is provided with a funnel-shaped entry opening (19) towards the jet (15) of liquid.

3. A method according to Claim 1, characterized in that the steel pipe (16) or the liquid device (17) [is] fixed or movable telescopically or performs a consecutive movement (21) controlled in accordance with the movement of the tool spindle (1).

4. A method according to Claim 3, characterized in that the jet (15) of liquid is turned on by corresponding valve arrangements only when the tool member (3) is in its operating position.

## Revendications

1. Procédé pour amener intérieurement un liquide jusqu'aux arêtes de coupe d'un outil d'usinage (3) qui est reçu par une extrémité d'une broche (1) porte-outils, rotative et mobile axialement (20), et qui est muni d'un corps présentant une chambre intérieure (4) à liquide reliée à des orifices de sortie, à proximité directe des arêtes de coupe (8, respectivement 11 et 12), par l'intermédiaire de canaux (5, 6 et 7, respectivement 9 et 10) partiellement radiaux, et percée d'un orifice axial d'admission (14) menant à cette chambre à liquide, ladite chambre à liquide étant sollicitée, à partir du côté situé à l'opposé de la broche porte-outils, par le jet de liquide (15) d'un tube de projection (16) alimenté par un dispositif (17) à liquide,
caractérisé par le fait que,
- pour développer une pression dans la chambre (4) à liquide, cette dernière est obturée par un diaphragme obturateur (18) percé d'un orifice (19) formant l'orifice d'admission, et
- le jet de liquide du tube de projection (16) axialement distant de l'orifice d'admission sollicite cet orifice d'admission (14).

2. Procédé selon la revendication 1,
caractérisé par le fait que
- le diaphragme obturateur (18) est percé d'un orifice infundibuliforme d'entrée (19) en direction du jet de liquide (15).

3. Procédé selon la revendication 1,
caractérisé par le fait que
- le tube de projection (16) ou le dispositif (17) à liquide est fixe ou mobile télescopiquement, ou bien accomplit un mouvement consécutif (21) commandé en fonction du mouvement de la broche (1) porte-outils.

4. Procédé selon la revendication 3,
caractérisé par le fait que
- le jet de liquide (15) est déclenché, par l'intermédiaire de groupes à soupapes correspondants uniquement lorsque le corps (3) de l'outil occupe sa position d'usinage.
